# EUROPEAN PATENT SPECIFICATION

(11) **EP 3 058 800 B1**
(45) Date of publication and mention of the grant of the patent: **18.04.2018**
(21) Application number: 16156778.9
(22) Date of filing: 22.02.2016
(51) Int. Cl.: A01C 23/04, F04D 29/42, B01F 5/16, B01F 15/00, F04D 15/00, A01C 3/02, B01F 5/02, B01F 15/02, F04D 7/04

(54) **AN IMPELLER PUMP**
KREISELPUMPE
POMPE CENTRIFUGE

(30) Priority: 20.02.2015 IE 20150043
(43) Date of publication of application: 24.08.2016
(73) Proprietor: Dancey, Leonard, County Cavan (IE)
(72) Inventor: Dancey, Leonard, County Cavan (IE)
(74) Representative: Schütte, Gearoid

(56) References cited:
- DE-A1- 3 321 143
- DE-C- 344 804
- GB-A- 1 493 119
- GB-A- 2 110 101
- US-A- 4 594 006
- US-A1- 2012 224 982

## Description

This invention relates to a slurry pump comprising an impeller rotor mounted within a rotor housing. In particular, the invention relates to a portable slurry pump for use in the agricultural sector having a hitch on a support framework to allow the slurry pump to be mounted on a suitable agricultural vehicle.

Throughout the following description the term "slurry" will be understood to comprise any mixture of solids and liquids forming a viscous substance. In the agricultural sector, the term slurry will normally be understood to comprise a viscous mixture of animal waste and waste water that is used as a fertiliser for crops and fields; the slurry will comprise animal manure which itself will comprise fibrous material.

The pump will be used in mixing, pumping and/or agitating the slurry. The conventional slurry pump which is known from the prior art comprises an impeller pump mounted on a support framework, whereby the support framework has a hitch which is used to mount the impeller pump on an agricultural vehicle, such as a tractor. The slurry pumps comprise an impeller rotor mounted within a rotor housing, and the impeller rotor housing comprises a single inlet opening and a single discharge outlet emanating from the housing. The housing is normally quasi-tubular in shape comprising a volute-shaped portion. The single inlet opening is usually formed by a circular hole on an underneath side of the housing and the discharge outlet normally emanates from the outer end of the volute-shape portion of the tubular shaped housing.

By attaching different outlet pipes to the discharge outlet, the pump can be used to spray slurry over an area or to pump the slurry to an elevated height to fill an over ground storage container or to pump slurry for the purpose of agitating slurry in a storage tank.

An example of such a prior art pump can be seen in European Patent Publication Number EP2870851 (SAMSON AGRO AS) which discloses a pump arrangement for filling a slurry tanker with a liquid such as slurry which contains varying amounts of contaminants. The pump arrangement includes a feed line with a filling pump for pumping the liquid to the tank; a discharge line with an emptying pump for pumping the liquid out of the tank; and, a return line to the tank associated with the emptying pump which arrangement generally aspirates the liquid through the filling pump.

Yet a further example of a slurry pump in accordance with the prior art is given in European Patent Publication Number EP0258165 (CRMS SARL.) which discloses an apparatus having a mobile pipe with one end of the pipe carrying a pump turbine. When the pipe is deployed, the pump turbine is used to fill a tanker connected to the other end of the pipe. There is a single inlet and single discharge outlet on the slurry pump. When the pipe is arranged along the tank in the transport and spreading position, the pump turbine can be used for spreading. The spreading operation is carried out through a distribution valve.

Further examples of slurry pumps are disclosed in US 2012/224982 A1, DE 344 804 C, US 4 594 006 A, DE 33 21 143 A1. A first problem that is known to affect these single discharge outlet slurry pumps is that the pump becomes inoperable when the sole discharge outlet is blocked. It is not uncommon for solid particles in the slurry to partially block the outlet causing the pump to become less efficient, or, in the case that the pipe becomes fully blocked, the pump will become completely inoperable. The pump operator must then clear the blockage from the outlet pipe which is time-consuming.

A further known problem with the slurry pump from the prior art is that the output capacity of the pump is limited by the size of the discharge outlet. The rotation of the impeller rotor builds up a pressure head in the rotor housing. The magnitude of the pressure head is relative to the rotational velocity of the impeller rotor. The amount of slurry that is output from the discharge outlet increases as the pressure head is increased. The pressure head can be increased by driving the impeller rotor at a faster rate. However, at a certain point, the discharge outlet will reach maximum output capacity, and an increase in pressure head will only lead to a very limited increase in output which would be an inefficient use of power. A solution to this problem has been to increase the output capacity of the discharge outlet by increasing the cross-sectional area of the discharge outlet. However, the larger cross-sectional area results in a lower output pressure from the discharge outlet, thus limiting the range that the slurry can be sprayed from the discharge outlet, or limiting the height to which the slurry can be pumped from the discharge outlet.

Furthermore the range over which slurry may be sprayed from the discharge outlet is somewhat limited and, for example, to spray an entire field with slurry, the slurry pump operator will have to methodically cover all of the field which is time consuming.

When agitating the slurry, a single outlet conventional pump as known from the prior art can take a relatively long period of time to create enough movement in stagnated slurry and get it moving again. Typically, the fibrous material in the slurry will float to the top of the slurry when stagnant and form a crust-like layer on a top surface which cover a liquid part of the slurry beneath the crust-like top layer. A single outlet pump can struggle to break up the crust-like layer and also get the liquid part of the slurry moving.

Moreover, due to the framework which typically supports the single discharge outlet type slurry pumps known from the prior art, there is oftentimes a blind spot in the slurry tank, caused by the framework inhibiting the rotation of the discharge outlet to agitate slurry in that particular blind spot.

It is a goal of the present invention to overcome at least one of the afore-mentioned problems.

### Summary of the Invention

The present invention is directed to a slurry pump comprising an impeller rotor mounted within a rotor housing; the rotor housing comprising a single inlet opening, wherein, the rotor housing further comprises a plurality of discharge outlets emanating from the rotor housing.

The advantage of using a plurality of outlets is that the output capacity of the pump can be increased for the same power input, whilst a suitable pressure is maintained at the outlets. Furthermore, the plurality of discharge outlets form multiple spray outputs and consequently increase the area covered by the multiple spray outputs. This decreases the amount of time needed to be spent by the pump operator spraying the field. Moreover, a blockage in one discharge outlet will not render the entire slurry pump inoperable, and the pump operator may continue to use the pump with only one discharge outlet functioning. The slurry pump can hence jet slurry through the plurality of discharge outlets in different directions and the twin jetter approach obviates any blind spots in slurry tanks as the two outlets can be rotated to give full coverage, even to the rear of a supporting framework. Moreover, due to having two outlets, there is an increase in the output efficiency of the slurry pump. The rotor housing comprises a plurality of concentric volute-shaped portions to form a quasi-tubular shaped rotor housing; whereby, a discharge outlet is formed at the outer end of each of the volute-shaped portions.

In another embodiment not according to the invention, each of the plurality of discharge outlets of the volute-shaped portions is located at the same height in the quasi-tubular shaped rotor housing.

According to the invention, each of the plurality of discharge outlets are located at different heights in the quasi-tubular shaped rotor housing. The plurality of volute-shaped portions are concentrically stacked; and in another embodiment, each of the plurality of discharge outlets is located at a unique height on the quasi-tubular shaped rotor housing. The plurality of volute-shaped portions are concentrically stacked; and, each of the plurality of discharge outlets is located at a different height on the quasi-tubular shaped rotor housing, and in another embodiment, a portion of each discharge outlet partially overlaps a portion of at least one of the other discharge outlets. The positioning of the discharge outlets at a different heights on the quasi-tubular shaped rotor housing is important as this allows the pressure head to be created within the quasi-tubular shaped rotor housing. If the discharge outlets were diametrically opposed and on the same horizontal plane of the same quasi-tubular shaped rotor housing, then the pressure head would not be able to build as there would be outlets at every 180° around the housing on the same horizontal plane. By situating the discharge outlets on different horizontal planes of the quasi-tubular shaped rotor housing (i.e. different height), by virtue of offsetting the volute-shaped portions by way of stacking and partial overlapping the volute-shaped portions, the pressure head can be allowed to build as there will just be one outlet every 360° on the same horizontal plane of the housing.

In yet still another embodiment, the rotor housing comprises two diametrically opposed discharge outlets.

Preferably, the impeller rotor comprises a single set of rotor vanes which act to pump slurry through each of the discharge outlets.

Still preferably, a discharge pipe leading from each discharge outlet is bifurcated having a first outlet leading to a spraying pipe and a second outlet leading to a tank filling pipe.

In a further embodiment, the plurality of outlet pipes comprise a flap valve at the point where the pipe is bifurcated.

In a further embodiment, the discharge pipe leading from each discharge outlet is bifurcated having a first outlet leading to a lower jetter pipe and a second outlet leading to an upper jetter pipe. This has the advantage that, in use, the pump can be inserted into a slurry tank and one of the discharge outlets can be arranged to lead to its lower jetter pipe, whilst the other discharge outlet can be arranged to lead to its upper jetter pipe. In use, the upper jetter pipe can be used to break up the crust-like top layer whilst the lower jetter pipe will be submerged in the liquid part which sits beneath the top layer and the lower jetter pipe outlet will concurrently be moving the liquid causing a current to form and assist in breaking up the top layer. This improves the efficiency of operation in getting the slurry to be agitated in a shorter time frame.

In yet a further embodiment, one or more of the discharge outlets comprises a deflection plate capable of being locked in a plurality of different positions to direct slurry output from the shorter pipe.

In a further embodiment, each tank filling pipe is arranged to be substantially in parallel alignment with each other by means of a suitable connection intermediate the inlet of the tank filling pipe and the associated discharge outlet.

In another embodiment, the rotor housing comprises upper and lower diametrically opposed discharge outlets; and, one of the outlet pipes comprises a 90° elbow bend to direct a first tank filing upwardly, and, the other outlet pipe comprises a S-shaped bend to direct a second tank filing pipe upwardly substantially in the parallel alignment as the first tank filing pipe.

In still another embodiment, the pump comprises a power take-off connection which is suitable to transfer power from a suitable power source to the impeller rotor.

In a further embodiment, the pump further comprises a support framework upon which the impeller rotor and rotor housing is mounted, and, a hitch to enable the slurry pump to be transported by a suitable vehicle.

In a further embodiment, the hitch which enables the slurry pump to be transported by a suitable vehicle comprises an articulated connection to allow a degree of movement between the vehicle and the slurry pump when the vehicle and slurry pump are connected together.

In a further embodiment, the articulated connection comprises a walled slide which accepts a connection bar attached to the vehicle and permits the connection bar to slide back and forth along the walled slide.

In a further embodiment, the articulated connection comprises a dampener to dampen the degree of movement between the vehicle and the slurry pump.

In a further embodiment, the articulated connection comprises a spring to dampen the degree of movement between the vehicle and the slurry pump.

In a further embodiment, the spring which dampens the degree of movement between the vehicle and the slurry pump is a coil spring.

In a further embodiment, the spring which dampens the degree of movement between the vehicle and the slurry pump is a leaf spring.

In a further embodiment, the dampener which dampens the degree of movement between the vehicle and the slurry pump is a ram.

In another embodiment, the single inlet opening is formed by a circular through hole on an underside of the rotor housing.

In a further embodiment, the pump comprises a chopping blade situated adjacent the single inlet opening on an underside of the rotor housing.

In a further embodiment, one or more of the plurality of discharge outlets comprises an adjustable nozzle to alter the cross-sectional area of the discharge outlet and thus change the pressure of a liquid being discharged through the discharge outlet.

The present invention is directed towards a slurry pump comprising an impeller rotor mounted within a rotor housing; the rotor housing comprising a single inlet opening, wherein, the rotor housing further comprises a plurality of discharge outlets emanating from the rotor housing. The plurality of discharge outlets emanating from the rotor housing provide a plurality of separate fluid discharges from the slurry pump. The rotor housing comprises a plurality of volute-shaped portions which form a quasi-tubular shaped rotor housing; whereby, a discharge outlet is formed at an outer end of each of the plurality of volute-shaped portions. The plurality of volute-shaped portions which form the quasi-tubular shaped rotor housing are substantially concentric. Each of the plurality of discharge outlets formed at the outer ends of the plurality of volute-shaped portions are located at different heights relative to one another on the quasi-tubular shaped rotor housing. The plurality of volute-shaped portions which together form the quasi-tubular shaped rotor housing are concentrically stacked to form the quasi-tubular shaped rotor housing; and, each of the plurality of discharge outlets is located at a different height on the quasi-tubular shaped rotor housing.

In a further embodiment, a portion of each volute-shaped portion partially overlaps a portion of at least one of the other volute-shaped portions when the volute-shaped portions are stacked together.

In a further embodiment, the rotor housing comprises two diametrically opposed discharge outlets.

In a further embodiment, the impeller rotor comprises a single set of rotor vanes which act to pump slurry through each of the discharge outlets.

In a further embodiment, a discharge pipe leading from each discharge outlet is bifurcated to comprise a first outlet leading to a spraying pipe and a second outlet leading to a tank filling pipe.

In a further embodiment, the plurality of outlet pipes comprise a flap valve at a point where the discharge pipe is bifurcated.

In a further embodiment, one or more of the discharge outlets comprises a deflection plate capable of being locked in a plurality of different positions to direct slurry output from the shorter pipe.

In a further embodiment, one or more of the discharge outlets comprises an adjustable nozzle assembly capable of altering a pressure of a fluid being discharged through the discharge outlet.

In a further embodiment, each tank filling pipe is arranged to be substantially in parallel alignment with each other by means of a suitable connection intermediate the inlet of the tank filling pipe and the associated discharge outlet.

In a further embodiment, the rotor housing comprises upper and lower diametrically opposed discharge outlets; and, one of the outlet pipes comprises a 90° elbow bend to direct a first tank filing upwardly, and, the other outlet pipe comprises a S-shaped bend to direct a second tank filing pipe upwardly substantially in the parallel alignment as the first tank filing pipe.

In a further embodiment, the pump comprises a power take-off connection which is suitable to transfer power from a suitable power source to the impeller rotor.

In a further embodiment, the pump further comprises a support framework upon which the impeller rotor and rotor housing is mounted, and, a hitch to enable the slurry pump to be transported by a suitable vehicle.

In a further embodiment, the hitch which enables the slurry pump to be transported by a suitable vehicle comprises an articulated connection to allow a degree of movement between the vehicle and the slurry pump when the vehicle and slurry pump are connected together.

In a further embodiment, the articulated connection comprises a walled slide which accepts a connection bar attached to the vehicle and permits the connection bar to slide back and forth along the walled slide.

In a further embodiment, the articulated connection comprises a dampener to dampen the degree of movement between the vehicle and the slurry pump. In a further embodiment, the articulated connection comprises a spring to dampen the degree of movement between the vehicle and the slurry pump.

In a further embodiment, the spring which dampens the degree of movement between the vehicle and the slurry pump is a coil spring. In a further embodiment, the spring which dampens the degree of movement between the vehicle and the slurry pump is a leaf spring. In a further embodiment, the dampener which dampens the degree of movement between the vehicle and the slurry pump is a ram.

In a further embodiment, the single inlet opening is formed by a circular through hole on an underside of the rotor housing. In a further embodiment, the pump comprises a chopping blade situated adjacent the single inlet opening on an underside of the rotor housing.

In a further embodiment, one or more of the plurality of discharge outlets comprises an adjustable nozzle to alter the cross-sectional area of the discharge outlet and thus change the pressure of a liquid being discharged through the discharge outlet.

### Detailed Description of Embodiments

The invention will be more clearly understood by the following description of some embodiments thereof, given by way of example only with reference to the accompanying drawings, in which:
Fig. 1 is a perspective view of a pump according to the present invention;
Fig. 2 is a further perspective view of the pump of Fig. 1;
Fig. 3 is a further perspective view of the pump of Fig. 1;
Fig. 4 is a further perspective view of the pump of Fig. 1;
Fig. 5 is a further perspective view of the pump of Fig. 1;
Fig. 6 is a side elevation view of the pump of Fig. 1;
Fig. 7 is a front elevation view of the pump of Fig. 1;
Fig. 8 is a top plan view of the pump of Fig. 1;
Fig. 9 is a bottom plan view of the pump of Fig. 1;
Fig. 10 is a partial cut-away perspective view of a portion of the pump of Fig. 1;
Fig. 11 is an exploded perspective view of a portion of the pump of Fig. 1;
Fig. 12 is a detail perspective view of a portion of the pump of Fig. 1;
Fig. 13a is a detail perspective view of an impeller rotor and associated chopping blade used on a pump in accordance with a further embodiment of the invention;
Fig. 13b is a detail perspective view of an impeller rotor and associated chopping blade used on a pump in accordance with another embodiment of the invention;
Fig. 14 is a detail perspective view of an adjustable nozzle on a discharge outlet in accordance with a further embodiment of the pump of the present invention;
Fig. 15a is a detail perspective view of hitching point with a dampener in accordance with one embodiment of the pump;
Fig. 15b is a detail perspective view of an alternative hitching point with a dampener in accordance with another embodiment of the pump; and,
Fig. 15c is a detail perspective view of a further alternative hitching point with a dampener in accordance with a further embodiment of the pump.

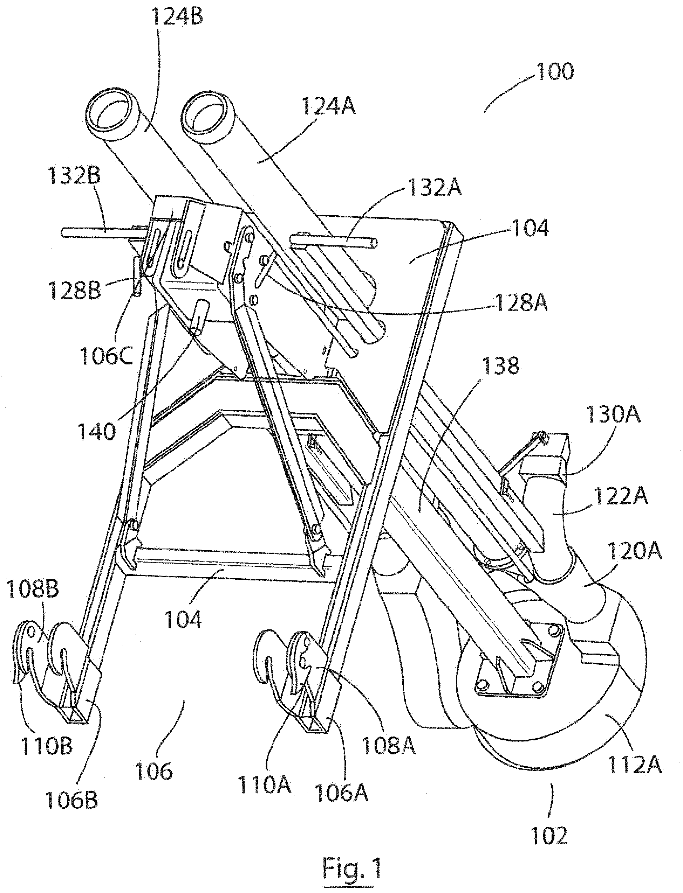

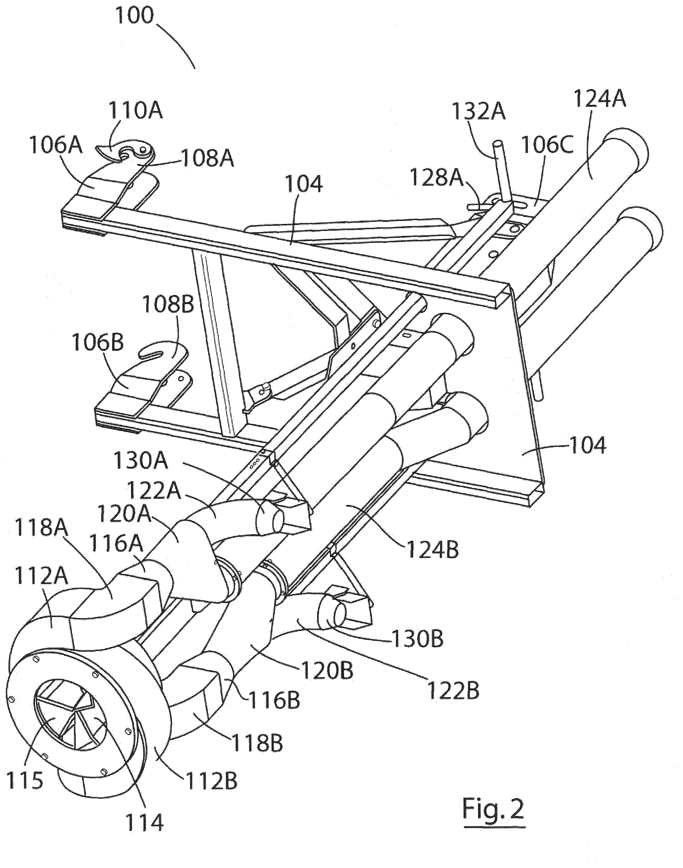

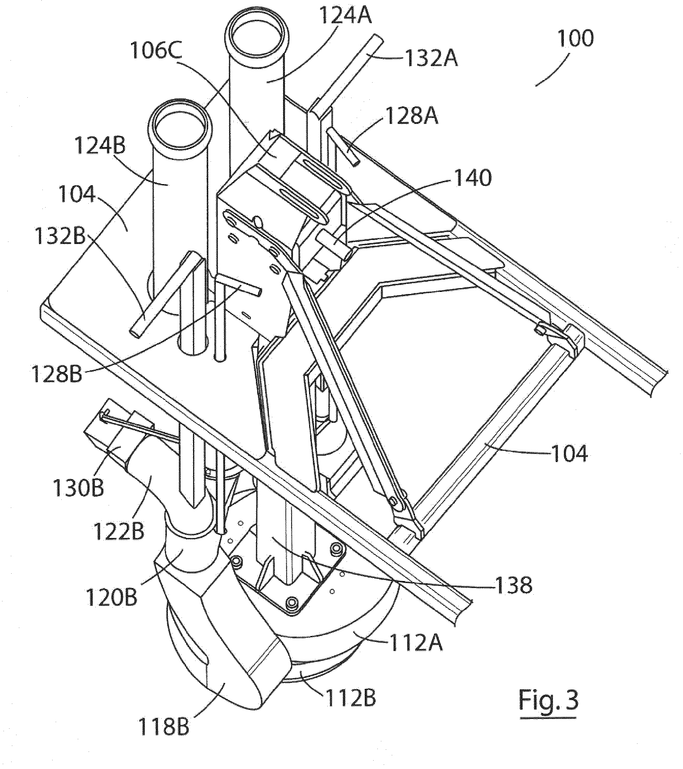

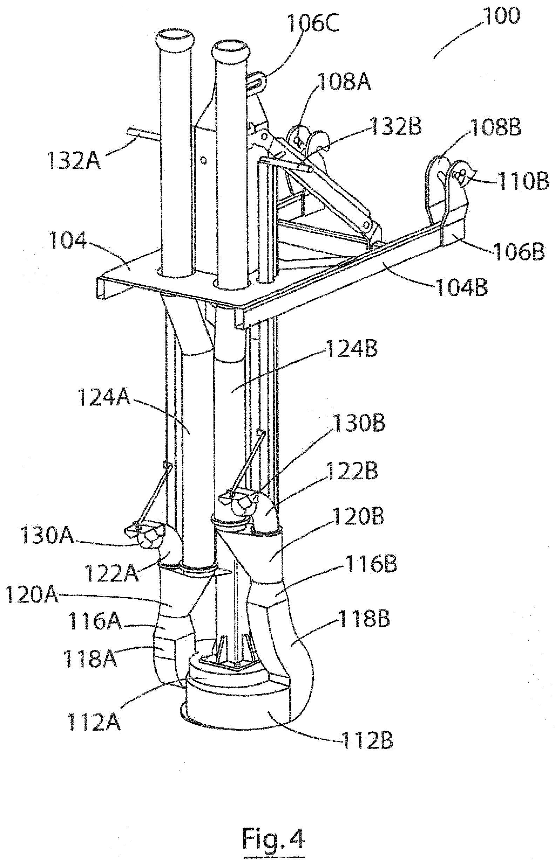

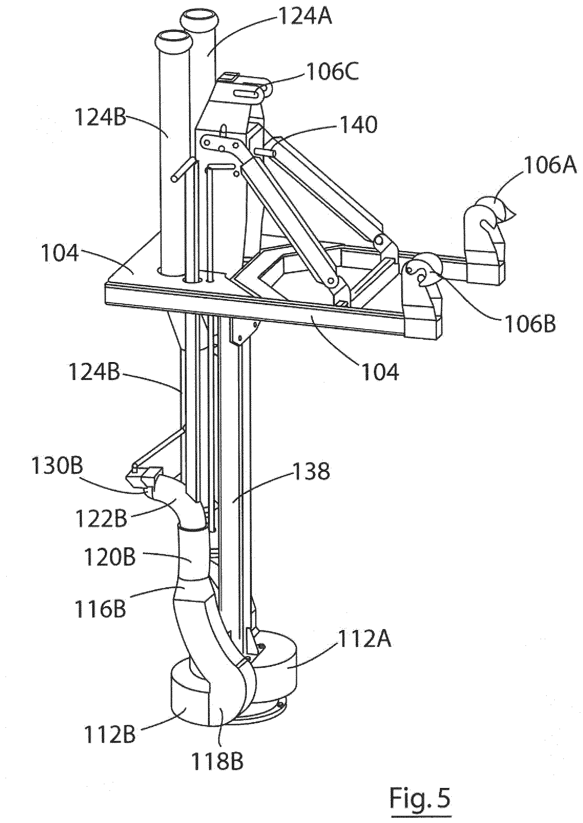

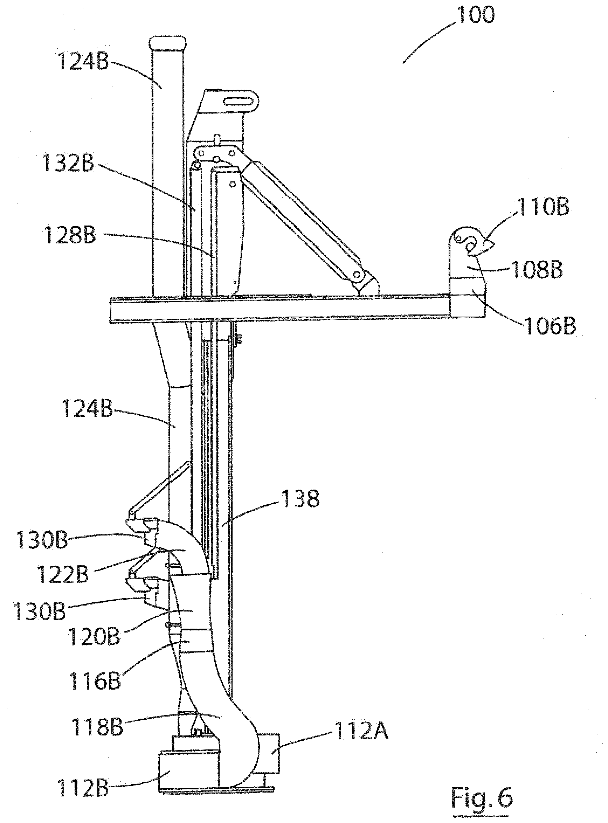

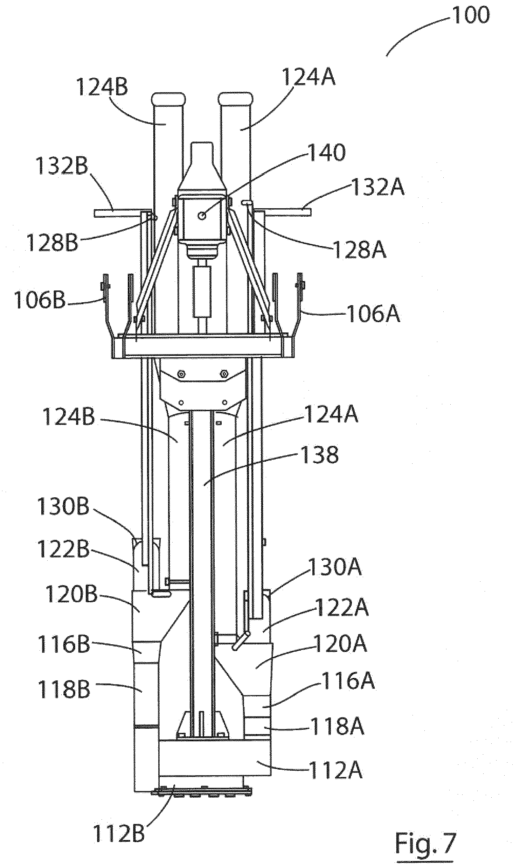

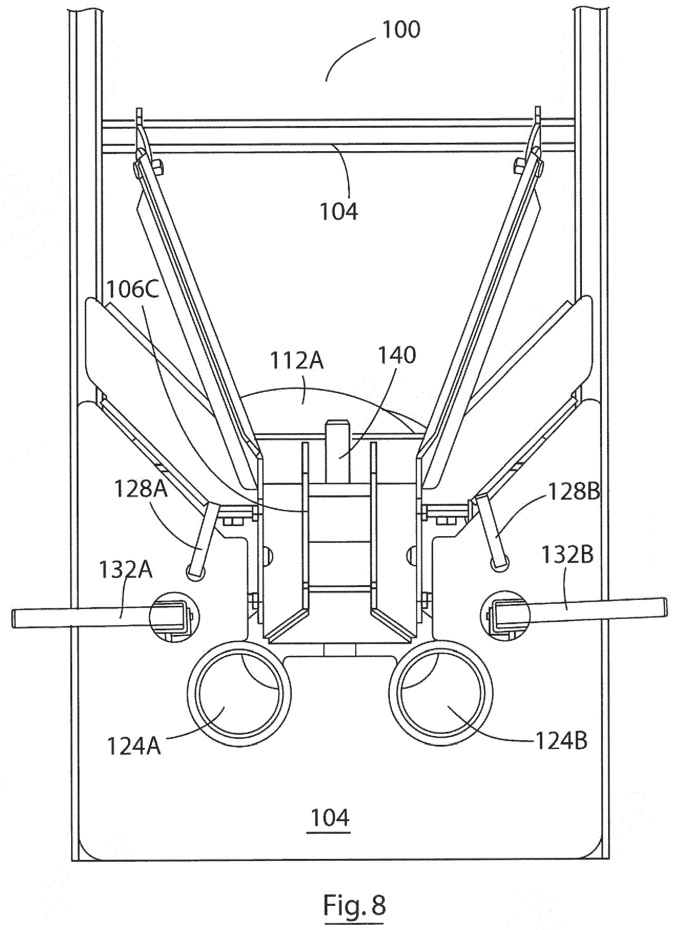

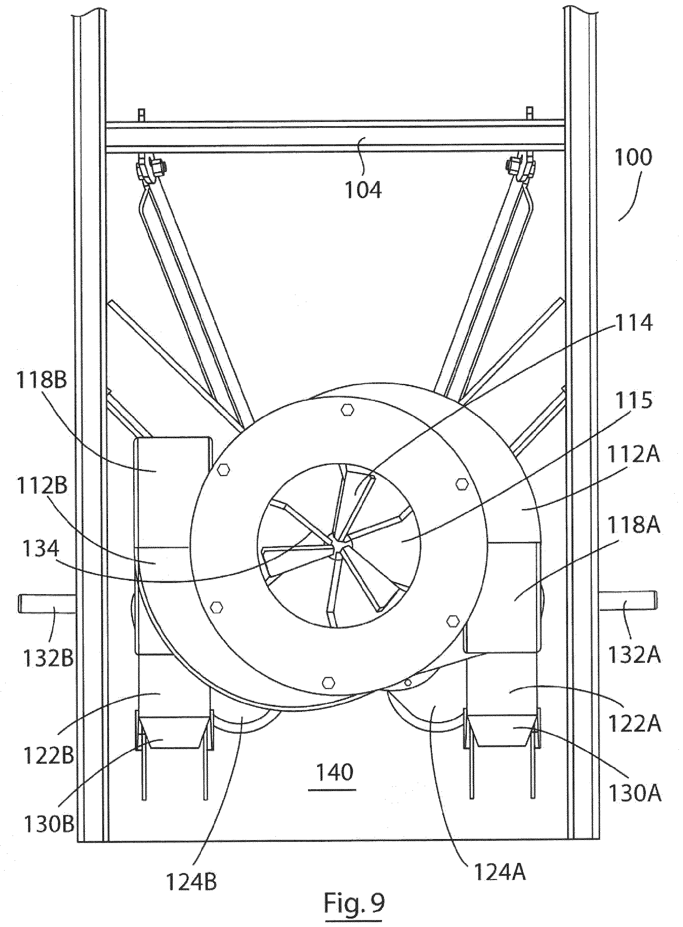

Referring to Figs. 1 to 9 inclusive there is provided a slurry pump assembly indicated generally by reference numeral 100 comprising an impeller pump indicated generally by reference numeral 102 mounted on a support framework 104.

The impeller pump 102 further comprises an impeller rotor housing 112 which substantially surrounds a single rotor 114 mounted therein. The impeller rotor housing 112 is quasi-tubular shaped. The impeller rotor housing 112 comprises an upper volute-shaped portion 112A and a lower volute shaped portion 112B. The upper volute shaped portion 112A is concentrically stacked atop the lower volute shaped portion 112B. The upper and lower volute shaped portions 112A, 112B partially overlap each other. A lowermost section of the upper volute-shaped portion 112A also forms part of an uppermost section of the lower volute-shaped portion 112B.

The impeller rotor housing 112 comprises a single inlet opening indicated generally by reference numeral 115. The inlet opening 115 is substantially circular in shape, however, other openings in the shapes of a rectangle, a hexagon, an oval, a triangle are also envisaged.

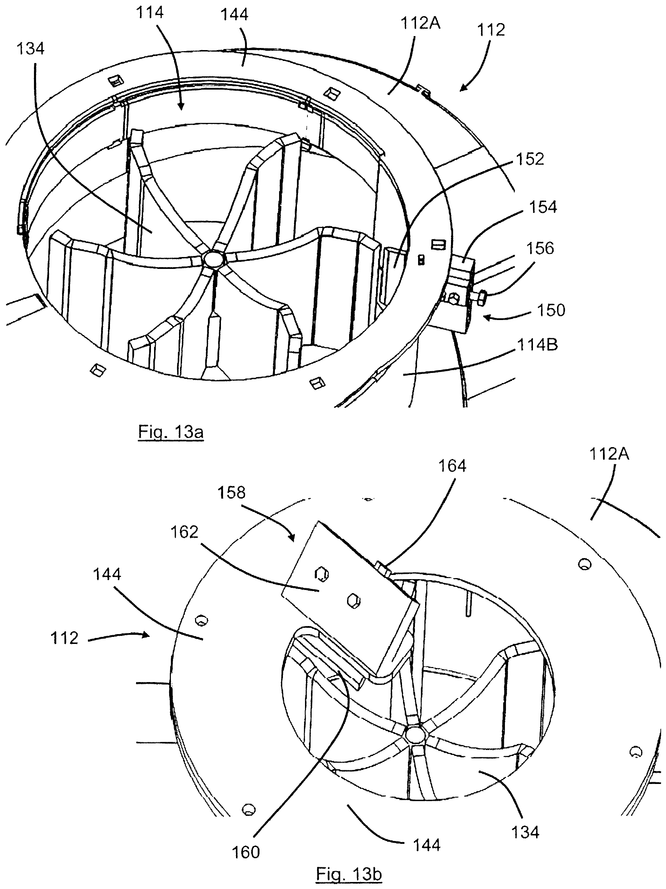

Referring now to Fig. 13a, there is shown a chopping blade assembly indicated generally by reference numeral 150 which is mounted on the rotor housing 112. The chopping blade assembly 150 comprises a chopping blade 152 secured within a blade mounting 154. The position of the chopping blade 152 within the blade mounting 154 can be adjusted by a positioning bolt 156. By rotating the positioning bolt 156, the position of the chopping blade 152 can be moved towards or away from impeller rotor vanes 134 which form the rotor 114. The chopping blade 152 is held to the side of the impeller rotor vanes 134. The chopping blade assembly 150 is used to cut up any pieces of elongate material that may be present in the slurry being pumped. By chopping up these pieces, the pump 100 is less likely to become clogged and thus inoperable.

An alternative chopping blade assembly is shown in Fig. 13b, where the chopping blade assembly is indicated generally by reference numeral 158. In this embodiment, the chopping blade assembly 158 comprises a chopping blade 160 which is held at an angle relative to the impeller rotor vanes 134. The blade mounting 162 of the embodiment is formed at an angle relative to a base plate 144 of the housing 112. A positioning bolt 164 is further provided to alter the position of the chopping blade 160 within the blade mounting 162.

Returning to Figs. 1 to 9 inclusive, the upper portion 112A is connected to an upper outlet pipe 116A via a 90° elbow member 118A. The lower portion 112B is connected to a lower outlet pipe 116B via a S-shaped member 118B. The S-shaped member 118B is used to re-align the position of the lower outlet pipe 116B so as to extend in the same vertical plane, in the front elevation view, as the upper outlet pipe 116A. In a further embodiment, the S-shaped member 118B may be replaced by a 90° elbow member, thus causing the lower outlet pipe 116B to extend in a different vertical plane, in the front elevation view, in comparison with the upper outlet pipe 116A. The upper outlet pipe 116A is diametrically opposed to the lower outlet pipe 116B when the rotor housing 112 is viewed in top plan view.

The upper outlet pipe 116A is bifurcated by a Y-shaped member 120A. One arm of the Y-shaped member 120A is connected to an upper jetter pipe 122A and the other arm of the Y-shaped member 120A is connected to an upper pumping pipe 124A. The upper pumping pipe 124A is at least three times longer than the upper jetter pipe 122A. A flap valve 126A pivotally mounted in the Y-shaped member 120A is operable to direct the slurry to either the upper jetter pipe 122A or the upper pumping pipe 124A. The flap valve 126A is controlled by a flap valve actuator 128A.

The upper jetter pipe 122A may be curvedly formed and comprise a nozzle 130A at a free end of the upper jetter pipe 122A to direct the output slurry spray. The slurry output from the nozzle 130A is directed by a hinged deflection plate which may be rotated by a deflection plate adjustment handle 132A.

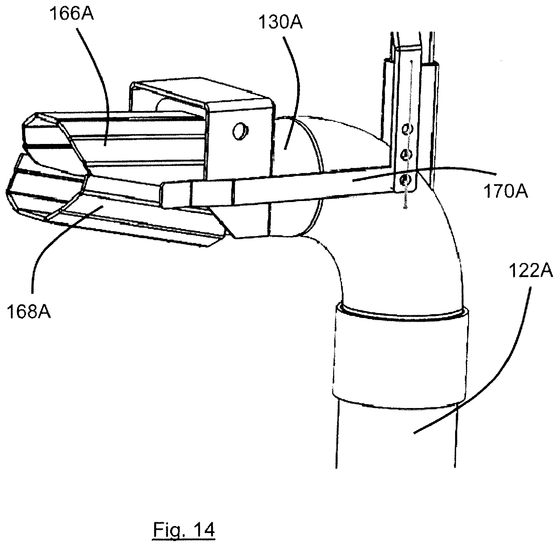

Turning now to Fig. 14, there is shown an adjustable nozzle on the upper jetter pipe 122A. The adjustable nozzle may be used in place of the hinged deflection plate mentioned above. The adjustable nozzle comprises a fixed portion 166A and a moveable portion 168A. The fixed portion 166A may partially overlap the moveable portion 168A and by moving the moveable portion 168A, the cross-sectional area of the discharge outlet formed by the fixed portion 166A and the moveable portion 168A can be increased or decreased so as to alter the pressure of the liquid being discharged through the upper jetter pipe 122A. It will of course be understood that in an alternative embodiment, the moveable portion 168A which is the lower of the two portions is fixed and the fixed portion 166A which is the upper of the two portions is moveable. A nozzle adjustment handle 170A is provided for moving the moveable portion 168A of the adjustable nozzle.

The deflection plate adjustment handle 132A, the nozzle adjustment handle 170A and the flap valve actuator 128A each comprise an elongated shaft to allow a pump operator (not shown) to operate the deflection plate on the nozzle 130A, the moveable portion 168A of the adjustable nozzle and/or the flap valve 126A at a remote distance from the nozzle 130A and the flap valve 126A respectively.

Returning to Figs. 1 to 9, the lower outlet pipe 116B is bifurcated by a Y-shaped member 120B. One arm of the Y-shaped member 120B is connected to a lower jetter pipe 122B and the other arm of the Y-shaped member 120B is connected to a lower pumping pipe 124B. In one embodiment, the lower pumping pipe 124B is at least three times longer than the lower jetter pipe 122B. A flap valve 126B pivotally mounted in the Y-shaped member 120B is operable to direct the slurry to either the lower jetter pipe 122B or the lower pumping pipe 124B. The flap valve 126B is controlled by a flap valve actuator 128B.

The lower jetter pipe 122B may be curvedly formed and comprise a nozzle 130B at a free end of the lower jetter pipe 122B to direct the output slurry spray. The slurry output from the nozzle 130B is directed by a hinged deflection plate which may be rotated by a deflection plate adjustment handle 132B.

Turning again to Fig. 14, it will be understood that the adjustable nozzle may be used in conjunction with the lower jetter pipe 122B such that there an adjustable nozzle on the upper jetter pipe 122B. The adjustable nozzle may be used in place of the hinged deflection plate. The adjustable nozzle would again comprise a fixed portion and a moveable portion where the moveable portion may partially overlap the fixed portion. By moving the moveable portion, the cross-sectional area of the discharge outlet formed by the fixed portion and the moveable portion can be increased or decreased so as to alter the pressure of the liquid being discharged through lower jetter pipe 122B. A nozzle adjustment handle is provided for moving the moveable portion of the adjustable nozzle.

The deflection plate adjustment handle 132B, the nozzle adjustment handle and the flap valve actuator 128B each comprise an elongated shaft to allow a pump operator (not shown) to operate the deflection plate on the nozzle 130B, the moveable portion of the adjustable nozzle and/or the flap valve 126B at a remote distance from the nozzle 130B and the flap valve 126B respectively.

Turning again to Figs. 1 to 9, the single impeller rotor 114 comprises a single set of impeller rotor vanes 134. The rotor vanes 134 act to pump slurry received through the inlet opening 115 to the upper outlet pipe 116A and to the lower outlet pipe 116B. The slurry which is received through the inlet opening 115 is initially received in the lower volute shaped portion 112B. As the rotor vanes 134 revolve, a pressure head is built up in the lower volute shaped portion 112B and some of the slurry is forced into the lower outlet pipe 116B. The remainder of the slurry is forced into the upper volute shaped portion 112A and is forced out the upper volute shaped pipe 116A. By vertically offsetting the volute-shaped portions 112A, 112B from one another, the pressure head required for pumping the slurry out of the quasi-tubular shaped rotor housing 112 is created in an efficient manner. If the two or more discharge outlets were on the same horizontal plane within the quasi-tubular shaped rotor housing 112, then the pressure head would struggle to build up.

The rotor vanes 134 are radially curved in an opposite direction to the direction of rotation of the rotor 114, such that the rotor vanes 134 curve away from the direction of rotation of the rotor 114 along their radial length. This radial curvature of the rotor vanes 134 is to assist in increasing the centrifugal force which is imparted to the slurry by the rotor vanes 134 so as to assist in creating the pressure head. This radial curvature can be best seen in Fig. 13a.

The rotor 114 is rotated by a drive shaft 136. The drive shaft 136 is encased by a drive shaft housing 138. A Power Take-Off (PTO) attachment 140 for connection with a PTO shaft is provided at a topside of the drive shaft 136. The impeller rotor 114 may be geared down or up depending on the horse power of the vehicle powering the pump 100. Typical gearing ratios may be 1:1.5 or 1:1.75.

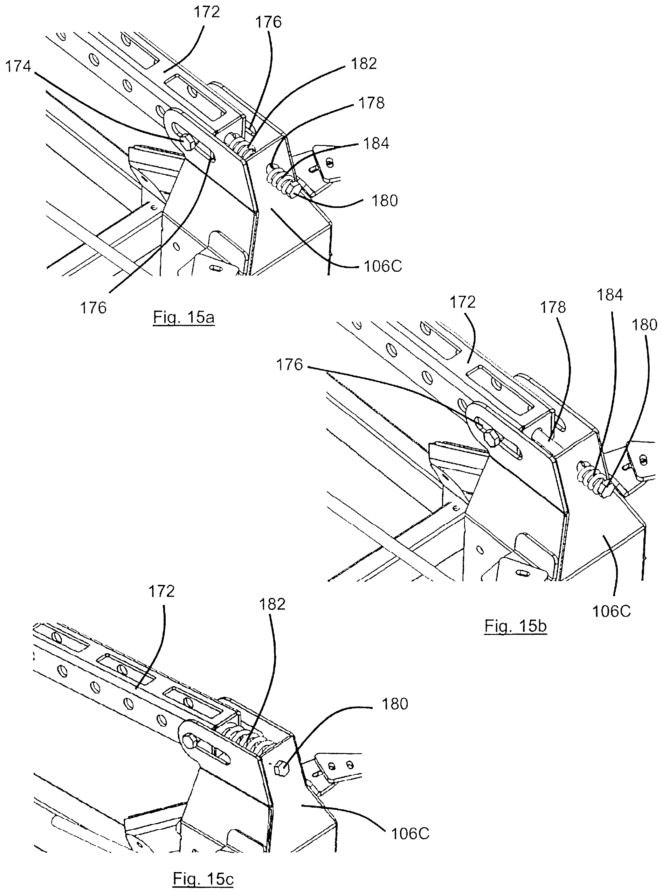

The framework 104 comprises a hitch 106 that is used to mount the pump 100 on a suitable vehicle (not shown). The hitch 106 may be a standard three-point hitch comprising three hitching points 106A, 106B, 106C. In a preferred embodiment, at least two of the hitching points 106A, 106B may comprise a hook 108A, 108B with a locking latch 110A, 110B respectively. The third hitching point 106C may be an articulated connection to allow for a degree of movement. This will assist in providing a forgiving connection point so that if the pump 100 inadvertently strikes a wall of an underground tank during removal or insertion, the articulated connection will be able to absorb any such movements caused by inadvertent strikes. Referring to Fig. 15a, there is shown a connection bar 172 from a vehicle (not shown) which is to be connected to the pump, whereby the connection bar 172 sits within a walled slide. The walled slide comprises guide slots 176 which permit a securing pin 174 to hold the connection bar 172 in place within the walled slide, but also allow the connection bar 172 to move back and forth along the walled slide. A restrictor pin comprising a bolt head 180 is used to restrict the movement of the connection bar 172 along the walled slide. A pair of coil springs 182, 184 are used as a dampener to permits a degree of movement between the connection bar 172 of the vehicle (not shown) and the hitching point 106C of the frame work of the pump.

Figs. 15b and 15c show alternate designs whereby just one of the pair of coil springs 182, 184 is used instead of the pair of coil springs 182, 184. It will be further appreciated that other types of spring, such as a leaf spring or a compression spring or a torsion spring, may be used in the stead of a coiled spring. Alternatively, other types of dampening means, such as a ram or a rubber dampener, may be used in the place of one or more of the springs 182, 184 shown in Figs. 15a to 15c. The articulated connection, especially with the dampener, will provide a forgiving connection point between the vehicle and the pump such that inadvertent bumps can be accommodated.

The framework 104 may be adjustable to allow the pump 100 to transition from a retracted position (not shown) to a deployed position (not shown). In the retracted position, the pump 100 is mounted in a substantially horizontal position, parallel to the ground, to allow the vehicle to transport the pump 100. In the deployed position, the pump 100 is held in a substantially vertical position, to allow the pump 100 to be dipped into a container of slurry (not shown) to be pumped.

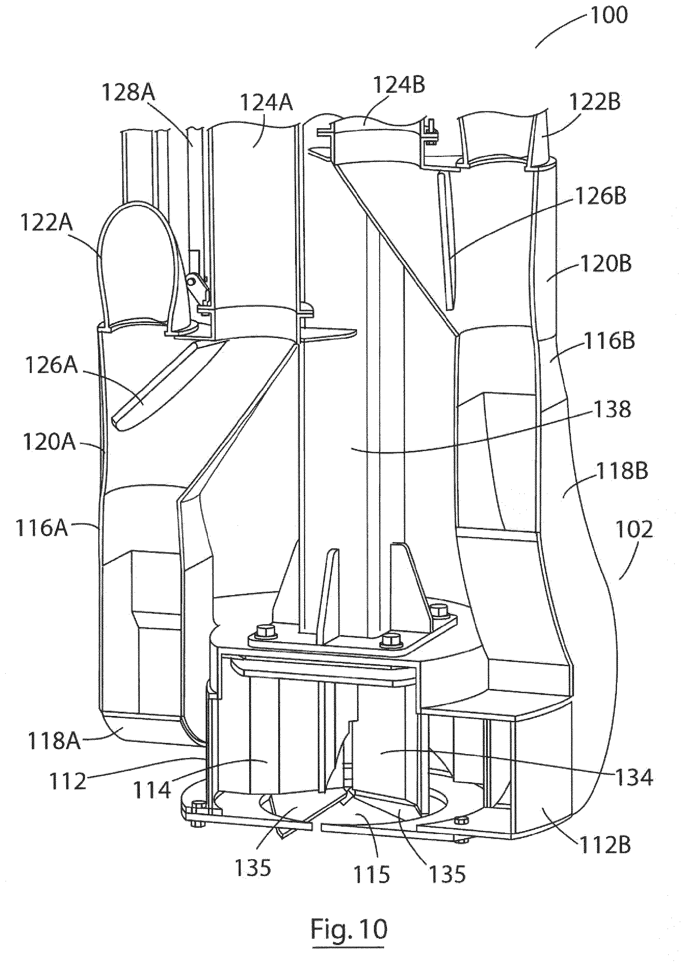

Referring to Fig. 10, the cross-section of the slurry pump 100 and the outlets 116A, 116B is shown. The impeller rotor vanes 134 of the impeller pump 102 comprise a cranked ends 135 which extend beneath the lowest level of the impeller rotor housing 112.

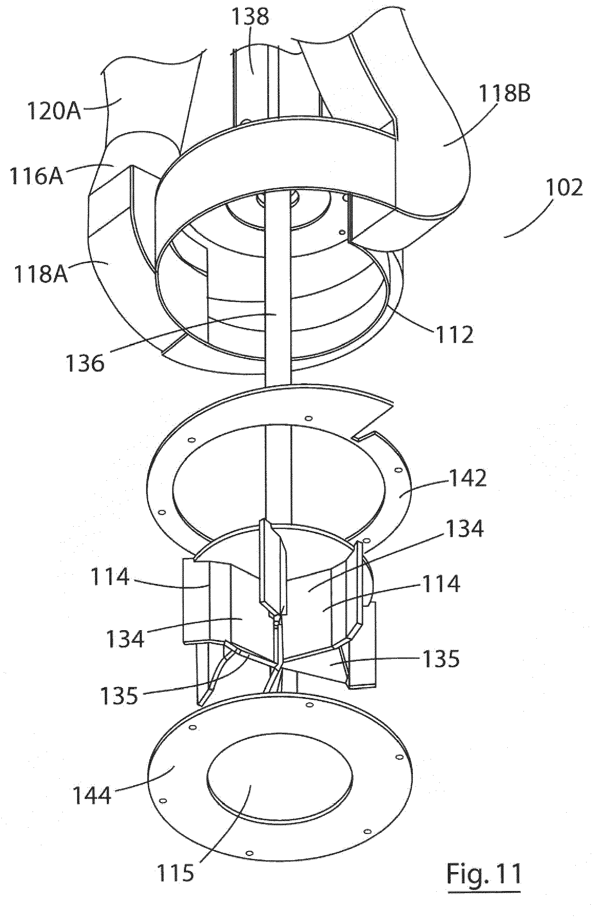

With reference to Fig. 11, the impeller pump 102 comprises an impeller rotor housing 112, a drive shaft 136, an impeller rotor 114, an upper base plate 142 and a lower base plate 144. The base plates 142, 144 are bolted to the bottom side of the impeller rotor housing 112. As mentioned hereinbefore, with reference to Figs. 13a and 13b, the chopping blade assembly 150, 158 is mounted adjacent the base plate 144 of the housing 112.

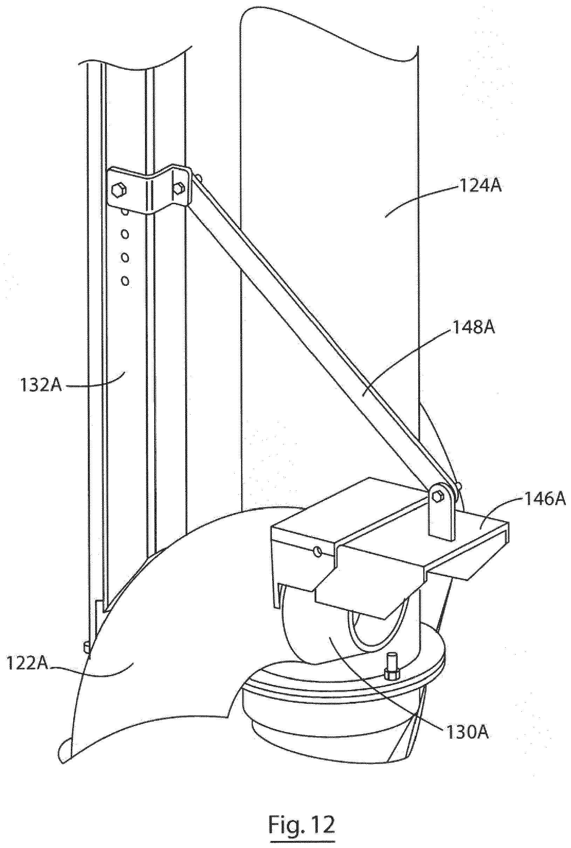

Referring to Fig. 12, the upper jetter pipe 122A has a nozzle 130A hingedly attached to which is a deflection plate 146A. The hinged deflection plate 146A is locked into one of a plurality of predefined positions by a moveable bracket 148A. The moveable bracket 148A is rotatably connected to the upper deflection plate adjustment handle 132A. The upper pumping pipe 124A is also shown. Referring to Fig. 14 and the description hereinabove, the deflection plate 146A on the upper jetter pipe 122A can be replaced by an adjustable nozzle. The same type of replacement of parts can be made in respect of the lower jetter pipe 122B.

In a further embodiment (not shown), the pump may comprise only one of the jetter pipe or pumping pipe. The pipes may be appropriately sized in diameter to allow for sufficient pressure to build up in the impeller rotor housing 112. The pump assembly may comprise its own base and wheels to allow the pump to be towed by a vehicle rather than to be mounted on a vehicle.

In another embodiment (not shown), the pump comprises a motor and a power attachment for connection with an external power source such as a mains power supply.

It will be readily understood that the pump may be fabricated from a suitable metal such as a sheet metal, a mild steel, iron, cast iron, or a resilient plastic which will can withstand the pressures of the slurry. The various parts of the pump may be bolted or welded together.

It will be understood that the rotor housing has been described as quasi-tubular in shape as the rotor housing is tubular for the most part, but comprises volute-shaped sections which necessitate the shape of the housing to depart from a strictly tubular shape. The terms "impeller housing", "rotor housing", "impeller rotor housing" and "housing" have been used interchangeably in the preceding specification.

In the specification the terms "comprise, comprises, comprised and comprising" or any variation thereof and the terms "include, includes, included and including" or any variation thereof are considered to be totally interchangeable and they should all be afforded the widest possible interpretation and vice versa.

The invention is not limited to the embodiments hereinbefore described which may be varied in both construction and detail within the scope of the appended claims.

## Claims

1. A slurry pump (102) comprising an impeller rotor (114) mounted within a rotor housing (12); the rotor housing comprising a single inlet opening (115), wherein, the rotor housing further comprises a plurality of discharge outlets emanating from the rotor housing;
the rotor housing comprising a plurality of volute-shaped portions (112 A, 112B) which are concentrically stacked to form a quasi-tubular shaped rotor housing; **characterised in that** a discharge outlet is formed at an outer end of each of the plurality of volute-shaped portions, such that each of the plurality of discharge outlets formed at the outer ends of the plurality of volute-shaped portions are located at different heights relative to one another on the quasi-tubular shaped rotor housing.

2. A slurry pump as claimed in claim 1, wherein, the plurality of discharge outlets emanating from the rotor housing provide a plurality of separate fluid discharges from the slurry pump.

3. A slurry pump as claimed in claims 1 or 2, wherein, a portion of each volute-shaped portion partially overlaps a portion of at least one of the other volute-shaped portions when the volute-shaped portions are stacked together.

4. A slurry pump as claimed in any preceding claim, wherein, the rotor housing comprises two diametrically opposed discharge outlets.

5. A slurry pump as claimed in any preceding claim, wherein, the impeller rotor comprises a single set of rotor vanes (134) which act to pump slurry through each of the discharge outlets.

6. A slurry pump as claimed in any preceding claim, wherein, a discharge pipe leading from each discharge outlet is bifurcated to comprise a first outlet leading to a spraying pipe (122 A, 122 B) and a second outlet leading to a tank filling pipe (124A, 124B).

7. A slurry pump as claimed in any preceding claim, wherein, one or more of the discharge outlets comprises an adjustable nozzle (130 A, 130B) assembly capable of altering a pressure of a fluid being discharged through the discharge outlet.

8. A slurry pump as claimed in any preceding claim, wherein, the pump further comprises a support framework (104) upon which the impeller rotor and rotor housing is mounted, and, a hitch (106) to enable the slurry pump to be transported by a suitable vehicle.

9. A slurry pump as claimed in claim 8 wherein, the hitch which enables the slurry pump to be transported by a suitable vehicle comprises an articulated connection (106 C) to allow a degree of movement between the vehicle and the slurry pump when the vehicle and slurry pump are connected together.

10. A slurry pump as claimed in claim 9 wherein, the articulated connection comprises a dampener (182, 184) to dampen the degree of movement between the vehicle and the slurry pump.

11. A slurry pump as claimed in claim 9 wherein, the articulated connection comprises a spring (182, 184) to dampen the degree of movement between the vehicle and the slurry pump.

12. A slurry pump as claimed in any preceding claim, wherein, the single inlet opening is formed by a circular through hole on an underside of the rotor housing.

## Patentansprüche

1. Dickstoffpumpe (102), umfassend einen Flügelradrotor (114), der in einem Rotorgehäuse (12) montiert ist;
wobei das Rotorgehäuse eine einzelne Einlassöffnung (115) umfasst, wobei das Rotorgehäuse ferner eine Vielzahl von Austrittsauslässen umfasst, die von dem Rotorgehäuse ausgehen;
wobei das Rotorgehäuse eine Vielzahl von schneckenförmigen Abschnitten (112A, 112B) umfasst, die konzentrisch gestapelt sind, um ein quasi rohrförmiges Rotorgehäuse zu bilden;
**dadurch gekennzeichnet, dass** an einem äußeren Ende von jedem der Vielzahl von schneckenförmigen Abschnitten ein Austrittsauslass gebildet ist, sodass sich jeder von der Vielzahl von Austrittsauslässen, die an den äußeren Enden der Vielzahl von schneckenförmigen Abschnitten gebildet sind, relativ zueinander an unterschiedlichen Höhen an dem quasi rohrförmigen Rotorgehäuse befindet.

2. Dickstoffpumpe nach Anspruch 1, wobei die Vielzahl von Austrittsauslässen, die von dem Rotorgehäuse ausgehen, eine Vielzahl von separaten Fluidaustritten von der Dickstoffpumpe bereitstellen.

3. Dickstoffpumpe nach Anspruch 1 oder 2, wobei ein Abschnitt von jedem schneckenförmigen Abschnitt einen Abschnitt von mindestens einem der anderen schneckenförmigen Abschnitte teilweise überlappt, wenn die schneckenförmigen Abschnitte übereinandergestapelt sind.

4. Dickstoffpumpe nach einem der vorangehenden Ansprüche, wobei das Rotorgehäuse zwei diametrisch entgegengesetzte Austrittsauslässe umfasst.

5. Dickstoffpumpe nach einem der vorangehenden Ansprüche, wobei der Flügelradrotor einen einzelnen Satz Rotorschaufeln (134) umfasst, die dahingehend wirken, Dickstoff durch jeden der Austrittsauslässe zu pumpen.

6. Dickstoffpumpe nach einem der vorangehenden Ansprüche, wobei ein Austrittsrohr, das von jedem Austrittsauslass wegführt, gegabelt ist, um einen ersten Auslass, der zu einem Sprührohr (122A, 122B) führt, und einen zweiten Auslass, der zu einem Tankfüllrohr (124A, 124B) führt, zu umfassen.

7. Dickstoffpumpe nach einem der vorangehenden Ansprüche, wobei einer oder mehrere der Austrittsauslässe eine einstellbare Düsenanordnung (130A, 130B) umfassen, die in der Lage ist, einen Druck eines Fluids, das durch den Austrittsauslass austritt, zu ändern.

8. Dickstoffpumpe nach einem der vorangehenden Ansprüche, wobei die Pumpe ferner Folgendes umfasst: einen Stützrahmen (104), an dem der Flügelradrotor und das Rotorgehäuse montiert sind, und eine Anhängevorrichtung (106), um zu ermöglichen, dass die Dickstoffpumpe von einem geeigneten Fahrzeug transportiert werden kann.

9. Dickstoffpumpe nach Anspruch 8, wobei die Anhängevorrichtung, die ermöglicht, dass die Dickstoffpumpe von einem geeigneten Fahrzeug transportiert werden kann, eine bewegliche Verbindung (106C) umfasst, um zwischen dem Fahrzeug und der Dickstoffpumpe einen Bewegungsgrad zu gestatten, wenn das Fahrzeug und die Dickstoffpumpe miteinander verbunden sind.

10. Dickstoffpumpe nach Anspruch 9, wobei die bewegliche Verbindung einen Dämpfer (182, 184) umfasst, um den Bewegungsgrad zwischen dem Fahrzeug und der Dickstoffpumpe zu verringern.

11. Dickstoffpumpe nach Anspruch 9, wobei die bewegliche Verbindung eine Feder (182, 184) umfasst, um den Bewegungsgrad zwischen dem Fahrzeug und der Dickstoffpumpe zu verringern.

12. Dickstoffpumpe nach einem der vorangehenden Ansprüche, wobei die einzelne Einlassöffnung von einem kreisförmigen Durchgangsloch an einer Unterseite des Rotorgehäuses gebildet wird.

## Revendications

1. Pompe à boue (102) comprenant un rotor centrifuge (114) monté à l'intérieur d'un carter de rotor (12) ;
le carter de rotor comprenant une ouverture d'admission unique (115), dans laquelle le carter de rotor comprend en outre une pluralité de sorties de refoulement émanant du carter de rotor ;
le carter de rotor comprenant une pluralité de parties en forme de volutes (112A, 112B) qui sont empilées concentriquement pour former un carter de rotor de forme quasi-tubulaire ;
**caractérisée en ce qu'**une sortie de refoulement est formée à une extrémité externe de chacune de la pluralité de parties en forme de volutes, de telle sorte que chacune de la pluralité de sorties de refoulement formées aux extrémités externes de la pluralité de parties en forme de volutes soit située à une hauteur différente l'une par rapport à l'autre sur le carter de rotor de forme quasi-tubulaire.

2. Pompe à boue selon la revendication 1, dans laquelle la pluralité de sorties de refoulement émanant du carter de rotor fournit une pluralité de refoulements de fluide séparés depuis la pompe à boue.

3. Pompe à boue selon les revendications 1 ou 2, dans laquelle une partie de chaque partie en forme de volute chevauche partiellement une partie d'au moins l'une des autres parties en forme de volutes quand les parties en forme de volutes sont empilées.

4. Pompe à boue selon l'une quelconque des revendications précédentes, dans laquelle le carter de rotor comprend deux sorties de refoulement diamétralement opposées.

5. Pompe à boue selon l'une quelconque des revendications précédentes, dans laquelle le rotor centrifuge comprend un ensemble unique d'aubes de rotor (134) qui servent à pomper la boue à travers chacune des sorties de refoulement.

6. Pompe à boue selon l'une quelconque des revendications précédentes, dans laquelle un tuyau de refoulement partant de chaque sortie de refoulement est bifurqué pour comprendre une première sortie conduisant à un tuyau de pulvérisation (122A, 122B) et une seconde sortie conduisant à un tuyau de remplissage de cuve (124A, 124B).

7. Pompe à boue selon l'une quelconque des revendications précédentes, dans laquelle une ou plusieurs des sorties de refoulement comprennent un ensemble de buse réglable (130A, 130B) capable de modifier une pression d'un fluide refoulé à travers la sortie de refoulement.

8. Pompe à boue selon l'une quelconque des revendications précédentes, dans laquelle la pompe comprend en outre une structure de support (104) sur laquelle le rotor centrifuge et le carter de rotor sont montés, et une attache de levage (106) permettant à un véhicule adapté de transporter la pompe à boue.

9. Pompe à boue selon la revendication 8, dans laquelle, l'attache de levage permettant à un véhicule adapté de transporter la pompe à boue comprend un raccord articulé (106C) afin de conférer un degré de mouvement entre le véhicule et la pompe à boue quand le véhicule et la pompe à boue sont raccordés ensemble.

10. Pompe à boue selon la revendication 9, dans laquelle le raccord articulé comprend un amortisseur (182, 184) pour amortir le degré de mouvement entre le véhicule et la pompe à boue.

11. Pompe à boue selon la revendication 9, dans laquelle le raccord articulé comprend un ressort (182, 184) pour amortir le degré de mouvement entre le véhicule et la pompe à boue.

12. Pompe à boue selon l'une quelconque des revendications précédentes, dans laquelle l'ouverture d'admission unique est formée par un trou débouchant circulaire sur un dessous du carter de rotor.
